# EUROPÄISCHE PATENTSCHRIFT

(11) **EP 1 609 647 B1**
(45) Veröffentlichungstag und Bekanntmachung des Hinweises auf die Patenterteilung: **28.03.2012**
(21) Anmeldenummer: 05014251.2
(22) Anmeldetag: 31.07.2003
(51) Int. Cl.: B60J 1/20

(54) **Fensterrollo mit Deckel auf dem Auszugsschlitz**
Roller blind with lid on the extract slot
Store à enrouler avec couvercle sur la fente extracte

(30) Priorität: 17.10.2002 DE 10248591
(43) Veröffentlichungstag der Anmeldung: 28.12.2005
(62) Teilanmeldung aus: 03017313.2
(73) Patentinhaber: BOS GmbH & Co. KG, 73760 Ostfildern (DE)
(72) Erfinder: Walter, Herbert, 73061 Ebersbach (DE); Hansen, Melf, 75053 Gondelsheim (DE)
(74) Vertreter: Rüger, Barthelt & Abel

(56) Entgegenhaltungen:
- EP-A- 0 237 845
- EP-A1- 1 099 579
- DE-A1- 3 532 013
- DE-A1- 10 057 764
- DE-C1- 4 431 110
- US-A- 5 947 544

## Beschreibung

Es ist ein Rollo für Kraftfahrzeuge bekannt, das eine unterhalb der Hutablage drehbar gelagerte Wickelwelle aufweist. In der Hutablage befindet sich ein Schlitz durch den hindurch das Rollo ausgefahren wird. Der Zugstab des Rollos läuft in Führungsschienen, die seitlich des Kraftfahrzeugsfensters angebracht sind. Zum Betätigen des Rollos ist einerseits ein Federmotor vorgesehen, durch den die Wickelwelle im Aufwickelsinne der Rollobahn vorgespannt ist und andererseits sind zwei linienförmige Schubglieder vorgesehen. Die Schubglieder sind in den Führungsschienen knicksteif geführt.

Zwischen dem jeweiligen Schubglied und dem Zugstab befindet sich eine formschlüssige Kupplung, die im Wesentlichen zwei Haken umfasst. Der eine Haken ist dem Zugstab und der andere Haken an dem Schubglied befestigt. Auf diese Weise kann mit Hilfe des Schubgliedes sowohl ein Schubdruck als auch eine Zugkraft auf die Zugstab übertragen werden. Nach dem vollständigen Einfahren der Rollobahn wird durch einen Nocken gesteuert, die formschlüssige Kupplung zwischen dem Zugstab und dem Schubglied getrennt.

Hierdurch ist ein Überhub möglich, um mit dem entgegengesetzen Ende des Schubglieds einen Deckel für einen Schlitz des Fensterrollos zu betätigen.

Die DE 100 57 746 A1 betrifft ein Fensterrollo mit zwei Rollobahnen und Führungsschienen. Die beiden Rollobahnen können aus dem offenen Auslaufschlitz der Hutablage ausfahren und sich dann vor dem Fenster schräg bewegen.

Die EP 1 099 579 A1 offenbart ein Fensterrollo mit einem Deckel, der die Wickelwelle in einem Gehäuse einschlieβen kann. Der Deckel besteht aus einem biegesteifen Hauptteil und einem elastischen Gelenkstück. Durch dieses ist der Deckel einerseits mit dem Rand des Gehäuses verbunden. Die Elastizität des elastischen Gelenkstücks lässt es als Schließfeder für den Deckel wirken.

Ausgehend hiervon ist es Aufgabe der Erfindung, ein Fensterrollo für Kraftfahrzeuge zu schaffen, bei dem der Schlitz, durch den die Rollobahn ausfährt, durch einen Deckel verschlossen ist, wobei die Betätigung von Deckel und Rollobahn noch weiter vereinfacht ist.

Diese Aufgabe wird erfindungsgemäß durch das Fensterrollo mit den Merkmalen des Anspruches 1 gelöst.

Bei dem neuen Fensterrollo ist das Schubglied, das in der zugehörigen Führungsschiene läuft, lediglich in Druckrichtung formschlüssig mit dem Zugstab gekuppelt. Die Verbindung zwischen dem Schubglied und dem Zugstab ist nicht dazu eingerichtet, eine Zugkraft zu übertragen. Das Einfahren der Rollobahn geschieht vielmehr ausschließlich mit Hilfe des in der Wickelwelle enthaltenen Federmotors oder einer anderen Antriebseinrichtung, die mit der Wickelwelle zusammenwirkt. Der Zugstab kann sich unter der Wirkung des Federmotors beim Einfahren lediglich in dem Maße in Richtung auf die Wickelwelle bewegen, wie dies die Einzugsbewegung der Schubglieder zulässt. Insoweit werden die Schubglieder bei der neuen Anordnung ständig nur auf Druck belastet. Hierdurch ist es ohne weiters möglich, dem Schubglied am Ende der Einfahrbewegung der Rollobahn einen Überhub zu gestatten, der dazu verwendet wird, den Deckel zu schließen.

Zum Schließen des Deckels wird entweder ein an dem Schubglied vorgesehener Nocken verwendet, der mit einem Betätigungsarm des Deckels zusammenwirkt und den Deckel gegen die Wirkung einer Öffnungsfeder schließt. Die andere Möglichkeit besteht darin, durch den Überhub das andere Ende des jeweiligen Schubglieds mit dem Deckel zusammenwirken zu lassen, um ihn in die Schließstellung zu überführen. Beide Varianten bieten Vorteile:

Bei der ersten Variante kann das Speichenrohr, das den hinteren Teil des Schubglieds aufnimmt, beliebig verlegt werden. Dafür ist ein Nocken notwendig, der aus der Führungsschiene herausragt und gegebenenfalls optisch als unbefriedigend angesehen wird. Die andere Ausführungsform vermeidet den zusätzlichen Nocken, so dass keine weiteren Maßnahmen an dem Schubglied ergriffen werden müssen. Dafür muss dafür gesorgt werden, dass das freie Ende des Speicherrohrs zu dem Deckel zurückgeführt wird, um hier eine Betätigungsmöglichkeit zu schaffen.

Dabei ist es besonders vorteilhaft, wenn durch eine Teleskophülse das an sich biegeweiche elastische Schubglied bei der Deckelbetätigung gegen Ausknicken geschützt ist.

Im übrigen sind Weiterbildungen der Erfindung Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung sind Ausführungsbeispiele des Gegenstandes der Erfindung dargestellt. Es zeigen:
- Fig. 1: einen stark schematisierten Ausschnitt aus einem Fahrzeug bei eingefahrenem Heckscheibenrollo,
- Fig. 2: die Anordnung nach Figur 1 bei ausgefahrenem Heckscheibenrollo,
- Fig. 3: die Anordnung zum Betätigen des Zugstabs, in ei- ner schematisierten Prinzipdarstellung,
- Fig. 4: das Zusammenwirken zwischen dem Zugstab und dem Schubglied an einem Ende des Zugstabs,
- Fig. 5 und 6: das Zusammenwirken des Schubglieds mit dem Deckel des Heckscheibenrollos nach Figur 1, in einer stark schematisierten Seitenansicht, und
- Fig. 7: ein anderes Ausführungsbeispiel zum Zusammenwir- ken des Schubglieds mit dem Deckel des Heckschei- benrollos

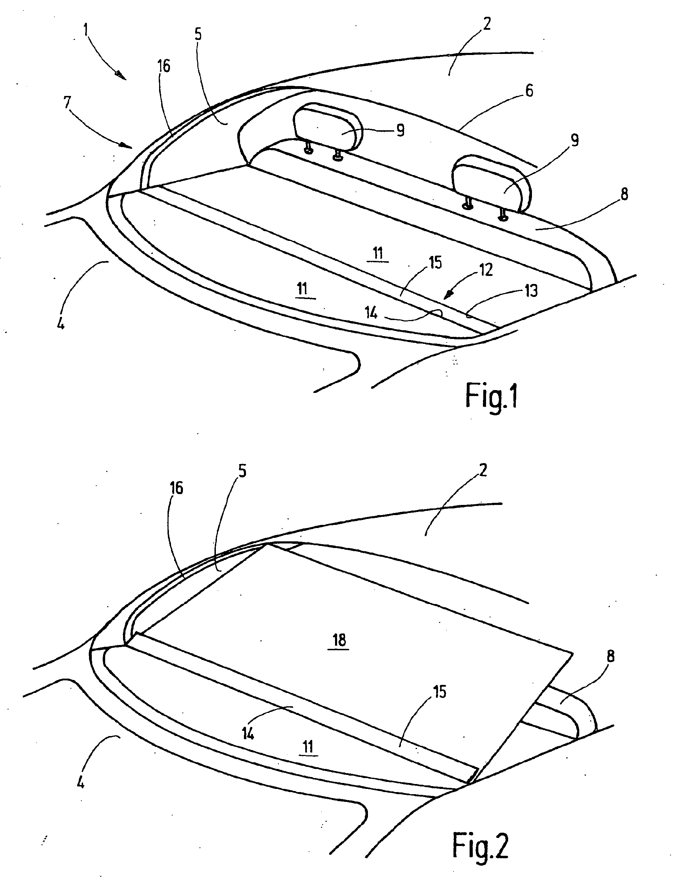

Figur 1 zeigt in einer stark schematisierten Ausschnittsdarstellung eine Heckpartie 1 einer Stufenhecklimousine. Zu erkennen ist ein Fahrzeugdach 2 sowie ein Abschnitt eines Kofferraumdeckels 4. Zwischen dem Kofferraumdeckel 4 und dem Dach 2 ist eine linke C-Säule 5 mit der daran befindlichen Innenverkleidung zu erkennen. Zwischen der linken C-Säule 5, einer Hinterkante 6 des Daches 2 und der Oberseite des Kofferraums ist ein Heckscheibenausschnitt 7 sichtbar, in dem sich eine nicht erkennbare Heckscheibe befindet. Zwischen der Unterkante des Heckscheibenausschnittes 7 und der Rückseite einer hinteren Sitzbank 8 mit Kopfstützen 9 erstreckt sich eine Hutablage 11. Quer durch die Hutablage verläuft ein Schlitz 12, der von zwei zueinander parallelen Schlitzrändern 13, 14 begrenzt ist. Der Schlitz 12 ist von einem Deckel 15 verschlossen und liegt zwischen den beiden C-Säulen 5.

Außerdem ist in der Innenverkleidung der linken C-Säule 5 eine Führungsschiene 16 zu erkennen, deren sichtbarer Verlauf auf der Höhe des Schlitzes 12 beginnt und die der seitlichen Kontur der Heckscheibenöffnung 7 bis in die Nähe des Daches 2 folgt.

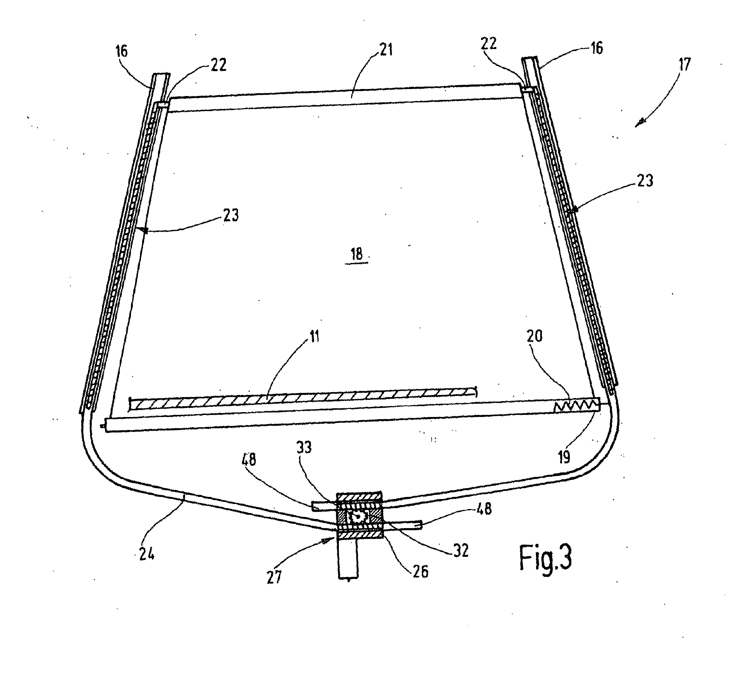

Unterhalb des Schlitzes 2 befindet sich die Mechanik für ein Heckscheibenrollo 17 (Fig. 3), dessen Rollobahn 18 in Fig. 2 im ausgezogenen Zustand zu erkennen ist. Hierzu ist der Deckel 15 schräg nach oben geschwenkt, um den Schlitz 12 frei zu geben.

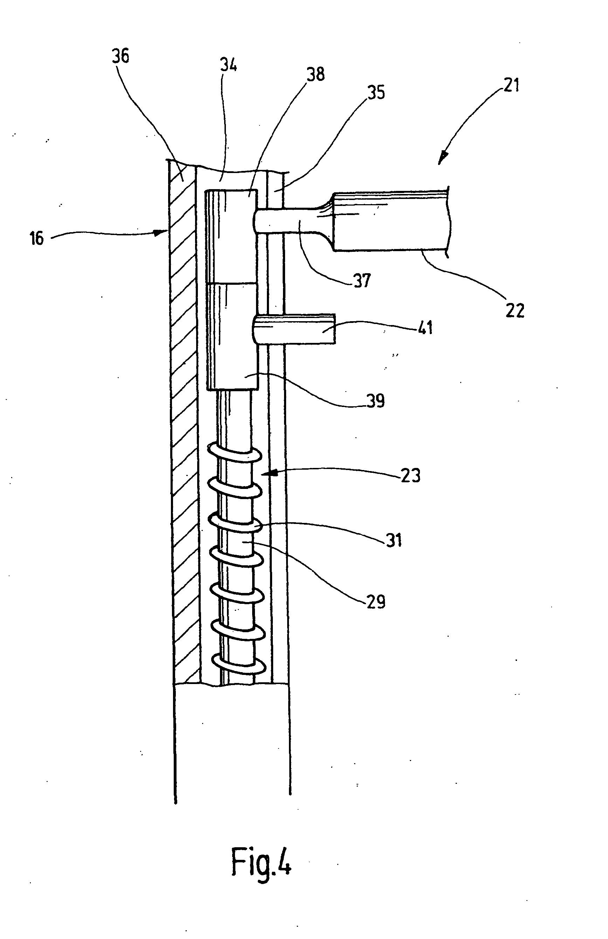

Der Aufbau des Heckscheibenrollos 17 wird nachstehend anhand der Figuren 3 und 4 erläutert.

Wie Figur 3 erkennen lässt, ist unter der Hutablage 11 eine Wickelwelle 19 drehbar gelagert. An dieser Wickelwelle 19 ist mit einer Kante die Rollobahn 18 befestigt. Ihre andere von der Wickelwelle 19 abliegende Kante ist mit einer Zugstabanordnung 21 verbunden.

Mittels eines Federmotors 20 innerhalb der Wickelwelle 19 wird die Wickelwelle 19 im Sinne des Aufwickelns der Rollobahn 18 vorgespannt.

Von der Zugstabanordnung 21 sind im Wesentlichen zwei teleskopartig verschiebbare Führungselemente 22 zu erkennen. Die teleskopartig verschiebbaren Führungselemente 22 kompensieren den veränderlichen Abstand zwischen den beiden Führungsschienen 16, die innerhalb des Fahrzeugs in der Innenverkleidung der beiden C-Säulen 5 des Fensters 6 eingebettet sind.

In den beiden Führungsschienen 16 werden Betätigungselemente 23 ausknicksicher geführt. Die Führungsschienen 16 setzen sich unterhalb der Hutablage 11 in Führungsrohren 24 und 25 fort, über die Führungsschienen 16 mit einem Getriebe 26 eines Getriebemotors 27 gekuppelt sind. Die Betätigungselemente 23 sind in den Führungsschienen 16 sowie den Verbindungsrohren 24 und 24 längsverschieblich.

Bei den Betätigungselementen 23 handelt es sich um linienförmige flexible Elemente ähnlich Seelen von Bowdenzügen. Wie die vergrößerte Darstellung von Fig. 4 zeigt, weist jedes Betätigungselement 23 ein druckfestes zylindrisches Kernelement 29 auf, dessen Außenseite mit einer schraubenförmig verlaufenden Rippe 31 versehen ist. Es entsteht eine Art schrägverzahnte runde Zahnstange. Mit Hilfe der Rippe 31 kämmen die Betätigungselemente 23 mit einem Ausgangszahnrad 32, das drehfest auf einer Ausgangswelle 33 des Getriebemotors 27 sitzt. Die beiden Betätigungselemente 23 führen an gegenüberliegenden Seiten an dem Zahnrad 32 tangential vorbei. Sie werden dadurch synchron in entgegengesetzte Richtungen bewegt.

Die Gestaltung der beiden Führungsschienen 16 ergibt sich aus der vergrößerten Darstellung von Figur 4. Jede Führungsschiene 16 ist eine Art Rohr mit einer Führungsnut 34, die sich zu einer Seite in einem Führungsschlitz 35 nach außen hin öffnet. An der gegenüberliegenden Seite bildet die Führungsschiene einen Rücken 36. Befestigungsflansche, die einstückig an die Führungsschiene 16 angeformt sind, sind in der Figur aus Darstellungsgründen nicht erkennbar.

Durch den Führungsschlitz 35 ragt ein verjüngter Halsteil 37 des Führungselements 22. Auf dem freien Ende des Halsteils 37 sitzt ein zylindrischer Führungskörper 38, der in den zylindrischen Teil der Führungsnut 34 mit geringem Spiel klemmfrei passt.

An dem freien Ende des Betätigungselementes 23 ist eine Kappe 39 befestigt, die ebenfalls in dem zylindrischen Teil der Führungsnut 34 mit geringem Spiel verschieblich ist. Aus der Kappe 39 ragt zur Seite ein Mitnehmerzapfen 41 vor, der durch den Führungsschlitz 35 nach außen vorsteht. Aufgrund der Anordnung hat der Mitnehmerzapfen 41 einen geringen aber deutlichen Abstand zu dem Führungselement 22.

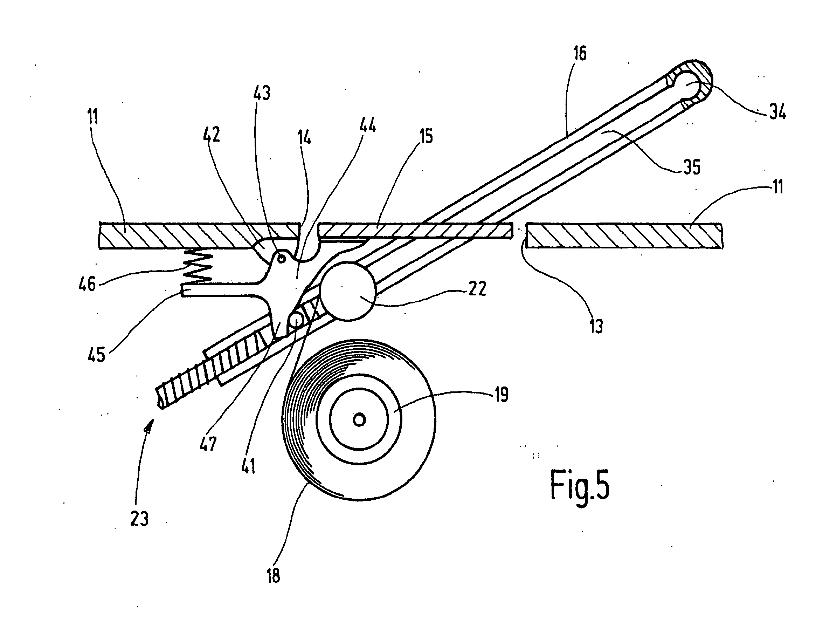

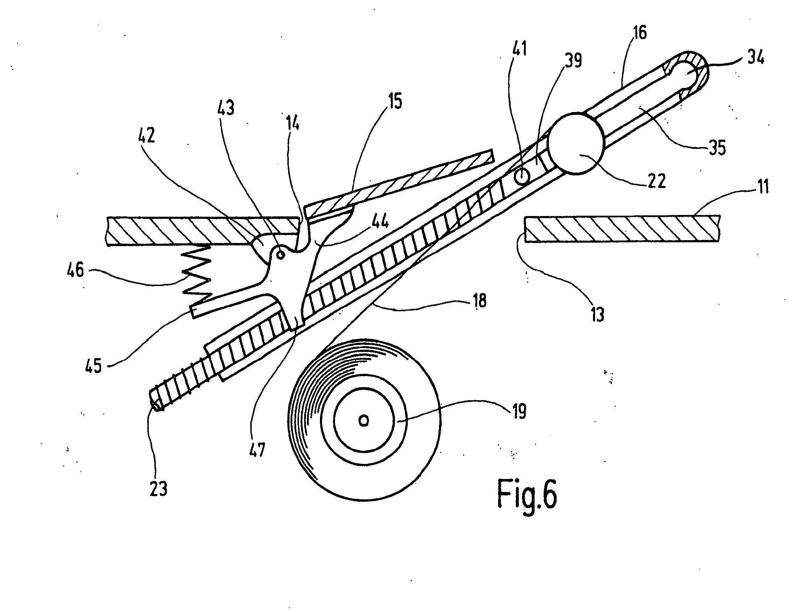

Die Art der Lagerung des Deckels 15 und seine Betätigung wird nachstehend anhand der Figuren 5 und 6 erläutert.

Die Figuren 5 und 6 zeigen einen Blick von der Fahrzeugmitte in Richtung auf die linke Fahrzeugseite. Es versteht sich, dass die Struktur auf der rechten Fahrzeugseite spiegelbildlich ausgeführt ist. Es genügt deswegen, wenn sich die Figurenbeschreibung auf die Erläuterung der Anlenkung des Deckels 15 auf der linken Fahrzeugseite beschränkt.

Wie in der Fig. 5 zu erkennen ist, trägt die Hutablage 11 neben dem Schlitzrand 15 an dem betreffende Ende des Schlitzes eine nach unten ragende Scharnierlasche 42, die über einen Scharnierbolzen 43 mit einer zweiten Scharnierlasche 44 gelenkig verbunden ist. Der Scharnierbolzen 43 liegt parallel zur Längsachse der Wickelwelle 19. Die Scharnierlasche 44 ist mit der Unterseite des Deckels 15 fest verbunden.

Mit Hilfe der so an beiden Enden des Deckels 15 gebildeten Scharniere ist er um eine Achse schwenkbar, die parallel zu der Wickelwelle 19 ausgerichtet ist. Er kann aus der Stellung nach Figur 1 die Stellung nach Fig. 2 überführt werden, in der ein in Richtung auf das vordere Ende des Fahrzeugs offener Schlitz entsteht.

Die Scharnierlasche 44 ist über den Scharnierbolzen 43 hinaus durch einen Arm 45 verlängert, der sich im Abstand zu der Unterseite des hinteren Teils der Hubablage 11 erstreckt. Zwischen dem hinteren Teil der Hutablage 11 und dem Arm 45 ist eine Druckfeder 46 angeordnet, die dazu dient, den Deckel 15 in die geöffnete Lage vorzuspannen. Anschläge, die die Offenstellung begrenzen, sind aus Gründen der Übersichtlichkeit nicht dargestellt.

Ein weiterer Arm 47 der Scharnierlasche 44 ragt aus der Sicht des Betrachters in das Lichtraumprofil des Führungsschlitzes 35. Der Arm 47 läuft in einem geringem Abstand vor der Führungsschiene 16 und zwar so, dass, wie Figur 5 erkennen lässt, der Mitnehmerzapfen 41 mit dem Arm 47 in Eingriff kommen kann.

Die Funktionsweise der Anordnung ist wie folgt:

Zum Einfahren der Rollobahn 18 wird der Getriebemotor 27 mit einer solchen Drehrichtung in Gang gesetzt, dass mit Hilfe des Zahnrads 32 die beiden Betätigungselemente 23 aus den Führungsschienen 16 zurückgezogen werden. Am Schluss der Einfahrbewegung stößt der Mitnehmerzapfen 41 gegen den Arm 47 und schwenkt den Arm 47 und damit den Deckel 15 in die Stellung nach Figur 5. Hierdurch wird der Deckel 15 in die Stellung gebracht, in der er den Schlitz 12 verschließt. Dabei kann durchaus die Zugstabanordnung 21 an einem Anschlag anlaufen oder beispielsweise auch an dem Außenumfang des auf der Wickelwelle 19 gebildeten Ballens aus Rollobahn 18. Das Aufwickeln der Rollobahn 18 auf der Wickelwelle 16 geschieht mit Hilfe des Federmotors 20, der ständig bestrebt ist die Wickelwelle 16 in die entsprechende Richtung zu drehen.

Der Führungskörper 38 und die Kappe 39, die den Mitnehmerzapfen 41 trägt, wirken lediglich in Druckrichtung miteinander zusammen. Eine Zugkraft ist nicht zu übertragen. Beim Einfahren sich kann sich deswegen jedes Betätigungselement 23 von der Zugstabanordnung 21 trennen, wenn letzere gegen einen Anschlag läuft, und im Überhub den Deckel 15 schließen.

Zum Ausfahren der Rollobahn 18 aus der Betriebsstellung nach Figur 5 wirkt der Getriebemotor 27 ist so in Gang gesetzt, dass er in den beiden Führungsschienen 16 synchron und phasenstarr die beiden Betätigungselemente 23 vorschiebt. Im Verlauf der Vorschubbewegung bewegt sich der Mitnehmerzapfen 21 in Richtung auf den Deckel 15. Entsprechend dieser Bewegung kann die Scharnierlasche 44 um den Scharnierbolzen 43 herumschwenken. Es wird der Feder 46 ermöglicht den Deckel 15 in die Stellung nach Figur 6 zu überführen. Im Verlauf der Vorschubbewegung wird auch die Kappe 39 gegen das Führungsglied 38 anstoßen und so an dem betreffenden Ende die Zugstabanordnung 21 von der Wickelwelle 19 wegschieben.

Figur 6 zeigt die Situation, in der der Deckel 15 geöffnet ist und die Zugstabanordnung 21 gerade eben oberhalb der Oberseite der Hutablage 11 auftaucht.

Wie die Zusammenschau der beiden Figuren erkennen lässt, wird das Öffnen des Deckels 15 durch die Druckfeder 46 bewerkstelligt, während das Schließen geschieht, indem der Mitnehmerzapfen 41 mit dem Betätigungsarm 47 zusammenwirkt und an diesem tangential zu dem Scharnierbolzen 43 zieht. Die Betätigung des Deckels 15 geschieht an beiden Enden wie oben beschrieben. Es ist jedoch auch eine einseitige Betätigung möglich.

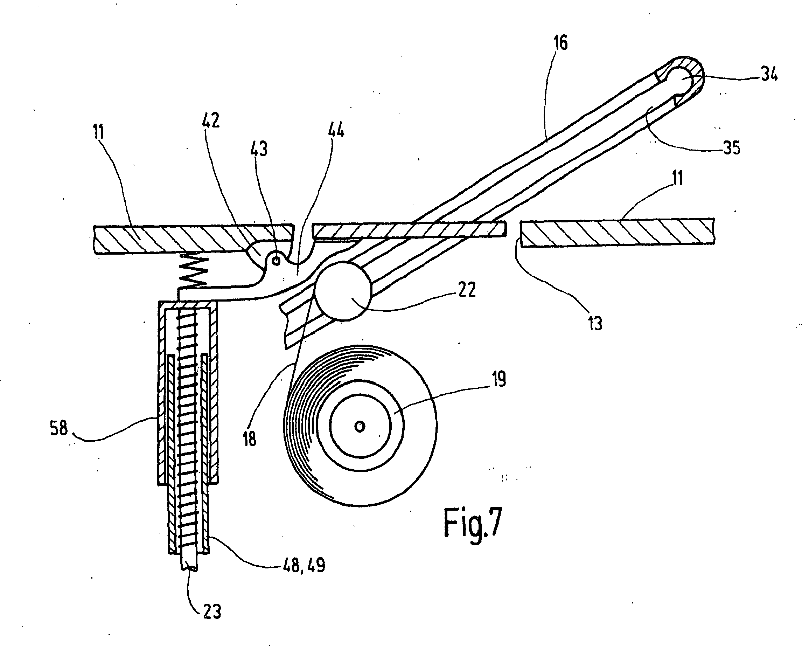

Figur 7 zeigt eine Ausführungsform, bei der nicht das der Zugstabanordnung 21 benachbarte Ende jedes Betätigungselementes 23 zum Schließen verwendet wird sondern das abliegende Ende.

Im Unterschied zu dem zuvor erläuterten Beispiel fehlt der Mitnehmerzapfen 41. Außerdem sind in Figur 3 lediglich als Stummel gezeigte Speichenrohre 48 und 49, die den jeweils nicht benötigten Teil des betreffenden Betätigungselementes 23 geschützt aufnehmen, gemäß Figur 7 so verlegt, dass ihr Ende sich in der Nähe der Scharnierlasche 44 befindet.

Über das freie Ende des Speicherrohrs 48 bzw. 49 ist teleskopartig eine Kappe 51 gestülpt, die auf der Außenseite des Speicherrohrs 48 bzw. 49 frei längs verschieblich ist. Die Kappe 51 dient als Knickschutz für das Betätigungselement 23, wenn es, wie in Figur 7 gezeigt, aus dem freien Ende des Speicherrohrs 48, 49 austritt.

Die Wirkungsweise ist ähnlich wie zuvor beschrieben. Beim Einfahren der Rollobahn 18 werden die Betätigungselemente 23 zurückgezogen und in das jeweilige Speicherrohr 49, 49 vorgeschoben. Sobald die Zugstabanordnung 21 an einem entsprechenden Anschlag anstößt, hört ihre Bewegung längs den Führungsschienen 16 auf. Die Betätigungselemente 23 laufen hingegen weiter und trennen sich von den Führungsgliedern 38. Ihre anderen Enden tauchen, wie Figur 7 erkennen lässt aus dem Ende des betreffenden Speicherrohrs 48, 49 vor und schieben die Kappe 59 in Richtung auf den Arm 45, so dass der Deckel 15, der ursprünglich durch die Kraft der Druckfeder 46 in der Offenstellung gehalten wurde, zugedrückt wird.

## Patentansprüche

1. Fensterrollo (17) für Kraftfahrzeuge mit C-Säulen,
mit wenigstens einer Wickelwelle (19), die von einer Abdeckung (11) verdeckt drehbar gelagert ist,
mit wenigstens einer Rollobahn (18), die mit einer Kante an der Wickelwelle (19) befestigt ist und durch einen Schlitz (12) der Abdeckung (11) ausfahrbar ist,
mit Führungsschienen (16), die sich jede zumindest ein Stück weit seitlich neben der aufgespannten Rollobahn (18) erstrecken, die jeweils wenigstens eine Führungsnut (34) enthalten und die die innerhalb des Fahrzeugs in der Innenverkleidung der beiden C-Säulen (5) des Fensters 6 eingebettet sind,
mit einer Zugstabanordnung (21), die an einer von der Wickelwelle (19) abliegenden Stelle der Rollobahn (18) mit der Rollobahn (18) verbunden ist und die an wenigstens einem Ende einen Führungskörper (38) aufweist, der in der wenigstens einen Führungsnut (34) geführt ist,
mit einem in der Führungsnut (34) laufenden Betätigungselement (23), das elastisch biegsam und linienförmig ist, das mit der Zugstabanordnung (21) lediglich in Druckrichtung wirkend mit der Zugstabanordnung (21) gekuppelt ist und das dazu eingerichtet ist unmittelbar den Deckel (15) zu bewegen,
mit einer Antriebseinrichtung (20,27) zum Verschieben des Betätigungselements (23) längs der zugehörigen Führungsnut (34) und zum Drehen der Wickelwelle (19),
**dadurch gekennzeichnet, dass** das Fensterrollo (17) einen an dem Schlitz (12) vorgesehenen Deckel (15), der bei eingefahrener Rollobahn (18) den Schlitz (12) zumindest überwiegend verdeckt, und einen an dem Deckel (15) vorgesehenen Betätigungsarm (45, 47) aufweist, der mit dem Betätigungselement (23) zusammenwirkt.

2. Fensterrollo nach Anspruch 1, **dadurch gekennzeichnet, dass** die Abdeckung (11) durch eine Hutablage gebildet ist und der Schlitz (12) sich in der Hutablage befindet.

3. Fensterrollo nach Anspruch 1, **dadurch gekennzeichnet, dass** der Deckel (15) um eine Achse schwenkbar ist, die parallel zu Wickelwelle (19) ausgerichtet ist.

4. Fensterrollo nach Anspruch 1, **dadurch gekennzeichnet, dass** der Deckel (15) durch eine Feder (46) in Öffnungsstellung vorgespannt ist.

5. Fensterrollo nach Anspruch 1, **dadurch gekennzeichnet, dass** das das Betätigungselement (23) die Gestalt einer biegsamen Zahnstange aufweist.

6. Fensterrollo nach Anspruch 1, **dadurch gekennzeichnet, dass** das Betätigungselement (23) mit einem Ende zum Zusammenwirken mit der Zugstabanordnung (21) und mit dem anderen zum Zusammenwirken mit dem Deckel (15) eingerichtet ist.

7. Fensterrollo nach Anspruch 1, **dadurch gekennzeichnet, dass** das Betätigungselement (23) an einem Ende mit einem Mitnehmerzapfen (41) versehen ist, der aus der Führungsnut (34) auskragt.

8. Fensterrollo nach Anspruch 1, **dadurch gekennzeichnet, dass** dem Betätigungselement (23) eine Knickschutzeinrichtung (51) zugeordnet ist.

## Claims

1. Window roller blind (17) for motor vehicles with C-columns,
with at least one winding shaft (19), which is rotatably mounted to be concealed by a covering (11),
with at least one blind sheet (18), which is fastened to the winding shaft (19) at one edge and can be extended through a slot (12) of the covering (11),
with guide rails (16), which each extend at least a short distance laterally next to the opened blind sheet (18), which respectively contain at least one guide groove (34) and which are embedded inside the motor vehicle in the inner lining of the two C-columns (5) of the window (6),
with a pull rod arrangement (21), which is connected to the blind sheet (18) at a location of the blind sheet (18) remote from the winding shaft (19) and which on at least one end has a guide body (38), which is arranged in the at least one guide groove (34),
with an operating element (23), which runs in the guide groove (34), is elastically flexible and linear, which is coupled to the pull rod arrangement (21) with the pull rod arrangement (21) only acting in the pressing direction and which is arranged to directly move the cover (15),
with a drive arrangement (20, 27) for displacing the operating element (23) along the associated guide groove (34) and for rotating the winding shaft (19),
**characterised in that** the window roller blind (17) has a cover (15), which is provided on the slot (12) and which at least momentarily conceals the slot (12) when the blind sheet (18) is retracted, and an operating arm (45, 47), which is provided on the cover (15) and cooperates with the operating element (23).

2. Window roller blind according to claim 1, **characterised in that** the covering (11) is formed by a parcel shelf and the slot (12) is located in the parcel shelf.

3. Window roller blind according to claim 1, **characterised in that** the cover (15) can be pivoted around an axis oriented parallel to the winding shaft (19).

4. Window roller blind according to claim 1, **characterised in that** the cover (15) is biased in open position by a spring (46).

5. Window roller blind according to claim 1, **characterised in that** the operating element (23) is in the form of a flexible toothed rack.

6. Window roller blind according to claim 1, **characterised in that** the operating element (23) is arranged with one end for cooperating with the pull rod arrangement (21) and with the other for cooperating with the cover (15).

7. Window roller blind according to claim 1, **characterised in that** at one end the operating element (23) is provided with an entrainment pin (41), which projects out of the guide groove (34).

8. Window roller blind according to claim 1, **characterised in that** the operating element (23) has an associated anti-buckling device (51).

## Revendications

1. Store à enrouleur pour fenêtre (17) pour véhicules automobiles dotés de montants C,
comprenant au moins un axe d'enroulement (19) qui est monté avec possibilité de rotation, en étant masqué par un élément de recouvrement (11),
comprenant au moins une bande de store (18) qui est fixée avec un bord à l'axe d'enroulement (19) et peut être déroulée à travers une fente (12) de l'élément de recouvrement (11),
comprenant des glissières (16) qui s'étendent chacune au moins sur une certaine distance sur le côté de la bande de store (18) déroulée, qui comportent chacune au moins une rainure de guidage (34) et qui sont intégrées, à l'intérieur du véhicule, dans l'habillage intérieur des deux montants C (5) de la fenêtre (6),
comprenant un agencement de barre de traction (21) qui est relié à la bande de store (18), à un endroit de la bande de store (18) éloigné de l'axe d'enroulement (19), et qui présente à au moins une extrémité un corps de guidage (38) qui est guidé dans la rainure de guidage (34), au nombre d'au moins une,
comprenant un élément d'actionnement (23) qui coulisse dans la rainure de guidage (34), qui est souple élastique et de forme linéaire, qui est accouplé à l'agencement de barre de traction (21), en agissant uniquement dans la direction de poussée, et qui est conçu pour déplacer directement le couvercle (15),
comprenant un dispositif d'entraînement (20, 27) pour déplacer l'élément d'actionnement (23) le long de la rainure de guidage (34) associée et pour mettre en rotation l'axe d'enroulement (19),
**caractérisé en ce que** le store à enrouleur pour fenêtre (17) présente un couvercle (15) qui est prévu sur la fente (12) et, lorsque la bande de store (18) est enroulée, recouvre au moins en majeure partie la fente (12), et que le store présente un bras d'actionnement (45, 47) qui est prévu sur le couvercle (15) et coopère avec l'élément d'actionnement (23).

2. Store à enrouleur selon la revendication 1, **caractérisé en ce que** l'élément de recouvrement (11) est constitué d'une plage arrière et que la fente (12) se trouve dans la plage arrière.

3. Store à enrouleur selon la revendication 1, **caractérisé en ce que** le couvercle (15) peut pivoter autour d'un axe qui est parallèle à l'axe d'enroulement (19).

4. Store à enrouleur selon la revendication 1, **caractérisé en ce que** le couvercle (15) est mis sous précontrainte par un ressort (46) en direction de la position d'ouverture.

5. Store à enrouleur selon la revendication 1, **caractérisé en ce que** l'élément d'actionnement (23) présente la forme d'une crémaillère souple.

6. Store à enrouleur selon la revendication 1, **caractérisé en ce que** l'élément d'actionnement (23) est conçu à une extrémité pour coopérer avec l'agencement de barre de traction (21) et à l'autre extrémité pour coopérer avec le couvercle (15).

7. Store à enrouleur selon la revendication 1, **caractérisé en ce que** l'élément d'actionnement (23) est pourvu à une extrémité d'un doigt d'entraînement (41) qui dépasse de la rainure de guidage (34).

8. Store à enrouleur selon la revendication 1, **caractérisé en ce qu'**un dispositif antiflambage (51) est associé à l'élément d'actionnement (23).
